# FASCICULE DE BREVET EUROPEEN

(11) **EP 3 966 360 B1**
(45) Date de publication et mention de la délivrance du brevet: **08.11.2023**
(21) Numéro de dépôt: 20723144.0
(22) Date de dépôt: 07.05.2020
(51) Int. Cl.: C23C 4/02, C23C 24/10, C23C 4/11, F01D 21/00, G01B 7/16, G01N 27/04, G01L 1/22

(54) **PROCÉDÉ DE RÉALISATION D'UN DISPOSITIF DE MESURE DE DÉFORMATIONS SUR UNE PIÈCE EN COMPOSITE À MATRICE CÉRAMIQUE ET PIÈCE CORRESPONDANTE**
VERFAHREN ZUR HERSTELLUNG EINER VORRICHTUNG ZUR MESSUNG VON VERFORMUNGEN AN EINEM KERAMISCHEN MATRIXVERBUNDTEIL UND ENTSPRECHENDES TEIL
METHOD FOR PRODUCING A DEVICE FOR MEASURING DEFORMATIONS ON A CERAMIC MATRIX COMPOSITE PART, AND CORRESPONDING PART

(30) Priorité: 09.05.2019 FR 1904809
(43) Date de publication de la demande: 16.03.2022
(73) Titulaire: SAFRAN AIRCRAFT ENGINES, 75015 Paris (FR)
(72) Inventeur: QUENNEHEN, Lucien Henri Jacques, 77550 MOISSY-CRAMAYEL (FR); TOUCHON, Christophe, 77550 MOISSY-CRAMAYEL (FR)
(74) Mandataire: Regimbeau
(86) Numéro de dépôt international: PCT/EP2020/062721
(87) Numéro de publication internationale: WO 2020/225367

(56) Documents cités:
- EP-A2- 1 990 633
- WO-A1-2018/127664
- FR-A1- 2 937 725

## Description

### DOMAINE DE L'INVENTION

La présente invention se situe dans le domaine de la réalisation d'un dispositif de mesure de déformations sur une pièce en composite à matrice céramique.

### ETAT DE LA TECHNIQUE

Dans le domaine aéronautique, il est de plus en plus courant, pour la fabrication des pièces de turbine notamment, de recourir à un composite à matrice céramique (en abrégé "CMC"), en lieu et place d'un matériau métallique.

Par l'expression "composite à matrice céramique", on entend un composite constitué de fibres de carbone et/ou de carbure de silicium, et parfois de mullite (3Al₂O₃, 2SiO₂), noyées dans une matrice constituée du même genre de composés. Ce CMC peut être constitué exclusivement de fibres de SiC, noyées dans une matrice de même nature.

Le recours à une telle matière s'explique notamment par leur grande résistance à haute température.

Il est bien entendu nécessaire d'instrumenter de telles pièces, c'est à dire de les équiper de dispositifs de mesures de déformations (en d'autres termes de jauges) afin de pouvoir analyser les sollicitations auxquelles sont soumises ces pièces, lors d'essais.

Toutefois, les technologies développées sur les pièces aéronautiques actuelles nécessitent d'être améliorées, pour plusieurs raisons.

Pour la mise en place des jauges, il est courant d'utiliser pour des pièces métalliques une sous-couche en alumine recevant la jauge pour favoriser une bonne accroche de la jauge sur la pièce aéronautique et, par voie de conséquence, de garantir une bonne qualité de mesure de la jauge.

Toutefois, si la pièce aéronautique et la sous-couche ont des coefficients de dilatation trop différents, cela revient à mesurer les contraintes dans la sous-couche et non plus réellement celle dans la pièce aéronautique.

De plus, on risque de générer des contraintes trop importantes à l'interface métal/sous-couche et, par voie de conséquence, de décoller la jauge.

En ce qui concerne, les pièces aéronautiques en CMC, celles-ci subissent des températures supérieures à 1300°C, ce qui nécessite d'utiliser des matériaux également capables de résister à ces températures.

En outre, le CMC se dilate moins que le métal, de sorte que les méthodes de collage des jauges utilisées jusqu'à présent ne sont pas directement transposables.

Enfin, le CMC est un matériau conducteur. Or, dans la mesure où le principe même de fonctionnement d'une jauge réside dans sa résistance électrique, cette dernière ne peut pas être directement en contact avec un matériau conduisant l'électricité.

Il existe donc un besoin d'améliorer les mesures de déformations réalisées, et cela notamment sur des pièces aéronautiques en CMC via les dispositifs de mesure des déformations.

Dans le même sens, on décrit dans EP1990633 et FR2915493 des procédés pour la réalisation d'un dispositif de mesure de déformations ainsi que les dispositifs de mesure correspondants.

Ces procédés connus ont en commun le fait de comprendre une étape de dépôt d'un revêtement d'alumine sur la pièce en CMC, suivie de la pose sur ce revêtement d'une jauge de déformations.

Ainsi, le revêtement en alumine fait office d'isolant électrique entre la pièce en CMC et la jauge.

Cette technique donne globalement satisfaction. Toutefois, malgré toutes les précautions prises, on constate dans certains cas des problèmes de tenue du revêtement et plus particulièrement de délamination au niveau de l'interface revêtement/CMC.

Ce phénomène est probablement dû à une différence notable entre les coefficients de dilatation à haute température de l'alumine d'une part et du CMC d'autre part.

Il existe également un besoin d'améliorer les procédés connus pour d'améliorer les mesures de déformations réalisées, et cela notamment sur des pièces aéronautiques en CMC via les dispositifs de mesure des déformations.

Par ailleurs, il est décrit dans WO2018/127664 une pièce comprenant un substrat avec au moins une partie en matériau contenant du silicium adjacente à une surface de substrat, et une barrière environnementale formée sur la surface du substrat, comprenant un dérivé de terre rare.

La présente invention a donc pour but d'apporter une solution à aux besoins exprimés plus haut.

### PRESENTATION DE L'INVENTION

A cet effet, l'invention concerne un procédé de réalisation d'un dispositif de mesure de déformations sur une pièce en composite à matrice céramique, notamment une pièce aéronautique, selon lequel on réalise d'abord sur ladite pièce un revêtement isolant électriquement, puis on dispose sur ledit revêtement une jauge de déformations.

Conformément à l'invention, ledit revêtement comprend un oxyde de terre rare.

Grâce aux caractéristiques de l'invention, on constate que la jauge présente une excellente tenue dans le temps, sans présenter les problèmes de délamination évoqués plus haut.

Par ailleurs, la couche de revêtement est en un matériau (oxyde de terre rare) qui présente une faible dilatation différentielle vis-à-vis du composite à matrice céramique. Dans ces conditions, la mesure effectuée par la jauge est donc fiable car celle-ci n'est pas perturbée par une dilatation différentielle du revêtement par rapport au composite à matrice céramique.

Enfin, le matériau du revêtement est isolant, de sorte que la jauge n'est pas perturbée par le caractère conducteur du composite à matrice céramique.

Selon d'autres caractéristiques avantageuses et non limitatives de ce procédé, prises seules ou en combinaison :
- ledit revêtement comprend un silicate ;
- on réalise ledit revêtement par un procédé plasma ;
- on réalise ledit revêtement par un procédé sol-gel ;
- ledit revêtement présente une épaisseur comprise entre quelques centièmes de millimètres et quelques dixièmes de millimètres ;
- préalablement à l'étape selon laquelle on dispose sur ladite pièce un revêtement isolant électriquement, on dépose sur ladite pièce une sous-couche en silicium ;
- on dispose ladite jauge sur ladite pièce par photosensibilisation ou par fabrication additive ;
- après avoir disposé ladite jauge sur ledit revêtement, on recouvre cette jauge d'un revêtement additionnel comprenant un oxyde de terre rare.

L'invention concerne également une pièce en composite à matrice céramique, telle qu'une pièce aéronautique, qui porte au moins un dispositif de mesure de déformations obtenu en mettant en oeuvre un procédé tel que présenté ci-dessus et qui se caractérise par le fait qu'elle comporte à sa surface un revêtement comprenant un oxyde de terre rare sur lequel repose ledit dispositif de mesure de déformations.

Selon un mode de réalisation, ledit revêtement comprend un silicate.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
[Fig. 1] est un schéma illustrant une première étape du procédé selon l'invention ;
[Fig. 2] est un schéma illustrant une autre étape du procédé selon l'invention ;
[Fig. 3] est illustrant encore une autre étape du procédé selon l'invention ;
[Fig. 4] est une vue simplifiée en perspective qui montre une jauge de déformation, en place sur une pièce en CMC.

### DESCRIPTION DETAILLEE DE L'INVENTION

Pour rappel, les jauges de déformations sont des résistances planes qui sont posées sur les pièces.

Une première étape du procédé selon l'invention consiste à réaliser sur une pièce en CMC, un revêtement isolant électriquement en oxyde de terre rare.

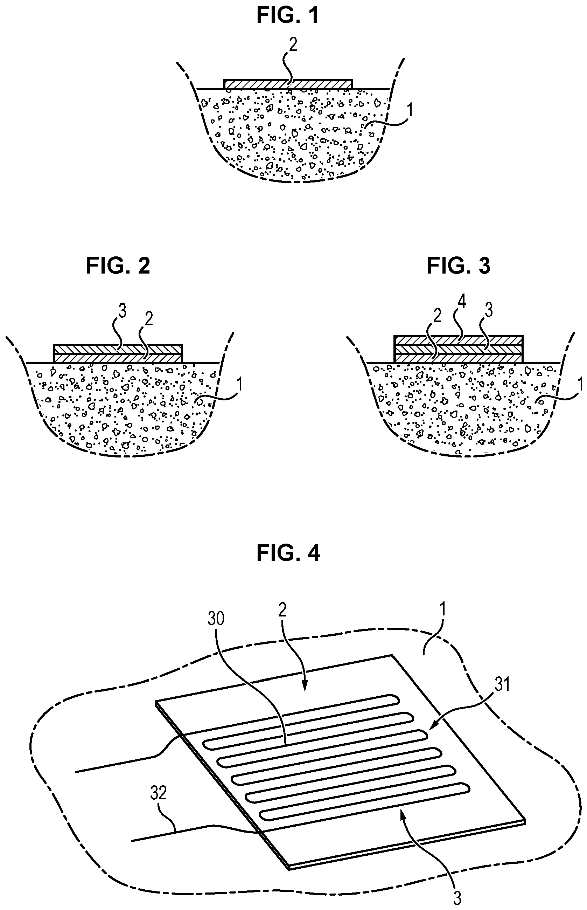

Cette étape est représentée schématiquement à la figure 1 annexée dans laquelle la référence 1 désigne la pièce en CMC à traiter, tandis que la référence 2 désigne le revêtement en oxyde de terre rare.

Sur cette figure tout particulièrement, mais également sur les autres figures, les dimensions, épaisseurs et forme des éléments représentés n'ont qu'une valeur illustrative, ils ne correspondent pas à la réalité.

Les terres rares sont les éléments chimiques dont le nombre atomique est compris entre 57 et 71, auxquels viennent s'ajouter le scandium, de numéro atomique 21 et l'yttrium, de numéro atomique 39.

La liste complète de ces terres rares est donc la suivante : lanthane, cérium, praséodyme, néodyme, prométhium, samarium, europium, gadolinium, terbium, dysprosium, holmium, erbium, thulium, ytterbium, lutécium, scandium et yttrium.

Avantageusement, cet oxyde de terre rare est un silicate. Par ailleurs, on peut faire indifféremment usage d'un silicate d'une seule terre rare, ou de deux terres rares différentes, c'est à dire dans lequel les atomes de silicium et d'oxygène sont combinés à deux terres rares différentes.

Ainsi que cela a été évoqué plus haut, le CMC est électriquement conducteur. Or, le principe de fonctionnement d'une jauge étant sa résistance électrique, il ne faut pas que celle-ci soit directement sur le matériau conduisant l'électricité.

Dans la mesure où les oxydes de terres rares ne sont pas conducteurs de l'électricité, la jauge portée par le revêtement 2 n'est pas perturbée par le caractère conducteur du CMC.

De plus, l'oxyde de terre rare qui forme le revêtement peut être déposé à la surface de la pièce 1 par des techniques telles que par voie "sol gel" (ou "solution-gélification") ou encore la voie "plasma".

La voie "sol gel" permet de déposer des couches très fines (c'est à dire de l'ordre de quelques centièmes de millimètres) d'oxyde de terre rare, couches très fines qui n'affectent donc pas ou pratiquement pas la qualité de la mesure faite par la jauge. En utilisant la voie "plasma", le dépôt sera plus épais (de l'ordre de quelques dixièmes de millimètres), de sorte qu'un usinage sera nécessaire.

Il s'agit de techniques connues en soi qui ne forment pas le coeur de la présente invention.

On se contente donc seulement de rappeler que la technologie "sol gel" permet de produire des matériaux vitreux, le cas échéant poreux, par frittage (et éventuel retraitement thermique), sans avoir à recourir à la fusion de la matière.

La tenue en température des oxydes de terres rares dépasse les 1300°C, ce qui est compatible avec les températures auxquelles est soumise la pièce 1 quand il s'agit d'une pièce aéronautique.

Selon un mode de réalisation particulier, non représenté sur les figures annexées, on dépose sur la pièce 1, préalablement au revêtement 2, une sous-couche en silicium. Cela permet de créer une épaisseur supplémentaire et intercalaire, garantissant une meilleure accroche du revêtement 2 sur la pièce 1.

L'étape ultérieure du procédé consiste à former sur ledit revêtement 2 une jauge de déformations 3. Cette jauge, représentée très symboliquement à la figure 2, est mieux visible à la figure 4 même si, encore une fois, il s'agit d'une représentation illustrative.

Il s'agit d'une jauge 3 en filament libre. Une telle jauge est connue de l'homme du métier, et seule sa structure générale est rappelée ici. La jauge 3 comprend un filament 30 qui est conformé en accordéon comme suit : le filament est recourbé sur lui-même une première fois pour former un "U" ayant une hauteur donnée, puis il est recourbé sur lui-même une seconde fois pour former un second "U" situé dans le même plan que le premier "U" et dont les branches ont la même hauteur, mais inversé.

Le filament est ainsi recourbé sur lui-même de nombreuses fois selon le même processus, sans que les branches des "U" ne se touchent, de façon à former dans un plan une grille 31.

La grille 31 a une forme générale rectangulaire, et se prolonge d'un côté par les deux extrémités 32 du filament, qui prolongent respectivement la première branche du premier "U" et la dernière branche du dernier "U" de la grille 31. Les extrémités 32 sont sensiblement parallèles et situés dans le même plan que la grille 31.

Les extrémités 32 du filament sont connectées à un appareillage électrique qui fait passer un courant dans le filament, afin de mesurer en temps réel les variations de la résistivité électrique du filament, et de fait les déformations de la pièce sur laquelle il est fixé.

Bien entendu, il est nécessaire de faire attention au passage des câbles pour relier la jauge 3 à la voie d'acquisition, c'est à dire audit appareil électrique.

Avantageusement, cette jauge est fabriquée en silicium. Le recours à ce matériau est particulièrement pratique, puisqu'il présente une température de fusion supérieure à 1400°C, ce qui est suffisamment loin de la température maximale de fonctionnement des pièces. De plus, le CMC a sa matrice partiellement constituée de silicium, ce qui facilite les approvisionnements de matière.

Dans un mode de réalisation possible, une fois la jauge fabriquée, on la recouvre d'une nouvelle couche 4 d'oxyde de terre rare. Ce faisant, on "encapsule" la jauge entre deux épaisseurs d'oxyde de terre rare, de sorte que l'on pare ainsi à l'éventualité de la séparation de la jauge par rapport à son support. Dans une variante de réalisation, cette nouvelle couche 4 peut être en alumine.

La jauge peut être fabriquée de plusieurs façons. Parmi celles-ci, on retiendra préférentiellement la photosensibilisation et la fabrication additive.

En ce qui concerne la photosensibilisation, on commence par déposer sur le revêtement du silicium dopé. On projette ensuite le schéma de la jauge en vue d'une photo-impression. On réalise alors le masquage des zones hors dépôt de silicium dopé, puis on procède à une attaque chimique du silicium dopé. Il ne reste ensuite que la jauge et le reste du silicium est retiré.

Pour ce qui est de la fabrication additive, on peut procéder à l'impression de la jauge par filet en utilisant un laser (selon la technique dite "Laser Metal Déposition") ou à l'aide d'un arc électrique.

Il est à noter que le recours à la fabrication additive permet d'obtenir une jauge présentant une surface réduite par rapport aux jauges connues, d'où un encombrement moindre.

Parmi les pièces en CMC du secteur aéronautique susceptibles d'être revêtues de telles jauges, conformément à la présente invention, on peut citer, à titre non limitatif : les anneaux de turbine et plus particulièrement toutes les zones hors veines, les distributeurs de turbine et plus particulièrement les pales et les plateformes, les volets de tuyère de moteur, du côté de la face hors veine, les capotages de tube d'injection de carburant, etc.

## Revendications

1. Procédé de réalisation d'un dispositif (3) de mesure de déformations sur une pièce (1) en composite à matrice céramique, notamment une pièce aéronautique, selon lequel on réalise d'abord sur ladite pièce (1) un revêtement (2) isolant électriquement, puis on dispose sur ledit revêtement (2) une jauge de déformations (3), **caractérisé en ce que** ledit revêtement (2) comprend un oxyde de terre rare.

2. Procédé selon la revendication 1, **caractérisé par le fait que** ledit revêtement (2) comprend un silicate.

3. Procédé selon l'une des revendications précédentes, **caractérisé par le fait que** l'on réalise ledit revêtement (2) par un procédé plasma.

4. Procédé selon l'une des revendications 1 ou 2, **caractérisé par le fait que** l'on réalise ledit revêtement (2) par un procédé sol-gel.

5. Procédé selon l'une des revendications précédentes, **caractérisé par le fait que** ledit revêtement (2) présente une épaisseur comprise entre quelques centièmes de millimètres et quelques dixièmes de millimètres.

6. Procédé selon l'une des revendications précédentes, **caractérisé par le fait que** préalablement à l'étape selon laquelle on dispose sur ladite pièce (1) un revêtement (2) isolant électriquement, on dépose sur ladite pièce (1) une sous-couche en silicium.

7. Procédé selon l'une des revendications précédentes, **caractérisé par le fait que** l'on dispose ladite jauge (3) sur ladite pièce (1) par photosensibilisation ou par fabrication additive.

8. Procédé selon l'une des revendications précédentes, **caractérisé par le fait que**, après avoir disposé ladite jauge (3) sur ledit revêtement (2), on recouvre cette jauge (2) d'un revêtement additionnel (4) comprenant un oxyde de terre rare.

9. Pièce aéronautique en composite à matrice céramique qui porte au moins un dispositif de mesure de déformations (3) obtenu par le procédé selon l'une des revendications 1 à 8, **caractérisée par le fait qu'**elle comporte une surface de mesure sur laquelle est réalisé un revêtement (2) comprenant un oxyde de terre rare sur lequel repose ledit dispositif de mesure de déformations (3).

10. Pièce selon la revendication 9, **caractérisé par le fait que** ledit revêtement (2) comprend un silicate.

## Patentansprüche

1. Verfahren zur Herstellung einer Vorrichtung (3) zur Messung von Verformungen an einem keramischen Matrixverbundteil (1), insbesondere einem Luftfahrtteil, wobei zuerst auf dem Teil (1) eine elektrisch isolierende (2) Beschichtung hergestellt wird und dann auf der Beschichtung (2) ein Verformungsmesstreifen (3) angeordnet wird, **dadurch gekennzeichnet, dass** die Beschichtung (2) ein Seltenerdoxid umfasst.

2. Verfahren nach Anspruch 1, **dadurch gekennzeichnet, dass** die Beschichtung (2) ein Silicat umfasst.

3. Verfahren nach einem der vorhergehenden Ansprüche, **dadurch gekennzeichnet, dass** die Beschichtung (2) durch ein Plasmaverfahren hergestellt wird.

4. Verfahren nach einem der Ansprüche 1 oder 2, **dadurch gekennzeichnet, dass** die Beschichtung (2) durch ein Sol-Gel-Verfahren hergestellt wird.

5. Verfahren nach einem der vorhergehenden Ansprüche, **dadurch gekennzeichnet, dass** die Beschichtung (2) eine Dicke von zwischen einigen hundertstel Millimetern und einigen zehntel Millimetern aufweist.

6. Verfahren nach einem der vorhergehenden Ansprüche, **dadurch gekennzeichnet, dass** vor dem Schritt, bei dem auf dem Teil (1) eine elektrisch isolierende Beschichtung (2) aufgebracht wird, auf dem Teil (1) eine Unterschicht aus Silizium aufgebracht wird.

7. Verfahren nach einem der vorhergehenden Ansprüche, **dadurch gekennzeichnet, dass** der Messtreifen (3) auf dem Teil (1) durch Photosensibilisierung oder durch additive Fertigung aufgebracht wird.

8. Verfahren nach einem der vorhergehenden Ansprüche, **dadurch gekennzeichnet, dass** nach dem Anordnen des Messstreifens (3) auf der Beschichtung (2) dieser Messstreifen (2) mit einer zusätzlichen Beschichtung (4) bedeckt wird, die ein Seltenerdoxid umfasst.

9. Luftfahrtteil aus keramischem Matrixverbundstoff, das mindestens eine Vorrichtung zur Messung von Verformungen (3) trägt, die durch das Verfahren nach einem der Ansprüche 1 bis 8 erhalten wird, **dadurch gekennzeichnet, dass** es eine Messoberfläche umfasst, auf der eine Beschichtung (2) hergestellt ist, die ein Seltenerdoxid umfasst, auf der die Vorrichtung (3) zur Messung von Verformungen (3) basiert.

10. Teil nach Anspruch 9, **dadurch gekennzeichnet, dass** die Beschichtung (2) ein Silicat umfasst.

## Claims

1. A process for producing a device (3) for measuring deformations on a ceramic matrix composite part (1), in particular an aeronautical part, according to which an electrically insulating coating (2) is first produced on said part (1), and then a deformation gauge (3) is placed on said coating (2), **characterized in that** said coating (2) comprises a rare-earth oxide.

2. The process as claimed in claim 1, **characterized in that** said coating (2) comprises a silicate.

3. The process as claimed in one of the preceding claims, **characterized by** the fact that said coating (2) is produced by a plasma process.

4. The process as claimed in one of claims 1 or 2, **characterized by** the fact that said coating (2) is produced by a sol-gel process.

5. The process as claimed in one of the preceding claims, **characterized by** the fact that said coating (2) has a thickness comprised between a few hundredths of a millimeter and a few tenths of a millimeter.

6. The process as claimed in one of the preceding claims, **characterized by** the fact that, prior to the step according to which an electrically insulating coating (2) is placed on said part (1), a silicon sublayer is deposited on said part (1).

7. The process as claimed in one of the preceding claims, **characterized by** the fact that said gauge (3) is placed on said part (1) by photosensitization or by additive manufacturing.

8. The process as claimed in one of the preceding claims, **characterized by** the fact that, after having placed said gauge (3) on said coating (2), this gauge (2) is covered with an additional coating (4) comprising a rare-earth oxide.

9. An aeronautical ceramic matrix composite part which carries at least one deformation measuring device (3) obtained by the process as claimed in one of claims 1 to 8, **characterized by** the fact that it comprises a measuring surface on which is produced a coating (2) comprising a rare-earth oxide on which said deformation measuring device (3) rests.

10. The part as claimed in claim 9, **characterized by** the fact that said coating (2) comprises a silicate.
